# EUROPEAN PATENT APPLICATION

(11) **EP 1 174 549 A2**
(43) Date of publication of application: **23.01.2002**
(21) Application number: 01202734.8
(22) Date of filing: 18.07.2001
(51) Int. Cl.: E03C 1/298

(54) **Backflow-preventer**

(30) Priority: 19.07.2000 NL 1015745; 30.11.2000 NL 1016755
(71) Applicant: Senteur, Michel Jacques, 1383 KE Weesp (NL)
(72) Inventor: Senteur, Michel Jacques, 1383 KE Weesp (NL)
(74) Representative: Assendelft, Jacobus H.W.

(57) **Abstract**

The invention is concerned with a seal, particularly in a line which is connected to a urinal on the one hand and to the sewer system on the other hand, with a passageway (1) with a passage of which at least one of the preferably sheet like boundaries is easily deformable such that said passageway has a first position wherein the passage is at least substantially fluid, particularly gas tight and a second position wherein the passage allows passage of fluid, particularly liquid and wherein preferably said passage boundary tries to keep said passage in the first position or brings it from the second in the first position by a force, such as by resilience. The passageway preferably has parts mutually making an angle.

## Description

The invention is concerned with a seal, particularly, but not exclusively, to connect sanitary appliances to the public sewer.

Although in the following the invention is described in connection with sanitary applications, it will be appreciated that the invention is also applicable in other fields, e.g. to tanks or pipelines with fill opening, such as for chemicals.

Sinks, toilets, bidets, urinals, bath pools and other sanitary appliances of households, offices, institutions, etc., connected to the public sewer, generally are provided with a bend filled with water (water trap), such that under all circumstances there is provided a closure allowing passage in a single direction between the domestic space (such as bath room) containing the sanitary appliance and the sewer. This one way valve is particulalrly designed to prevent bad odors and dangerous (explosive) gasses to enter the domestic room from the sewer.

Application of a water trap has several disadvantages: as soon as the water is removed therefrom, the correct functioning of the water trap is lost. In particular urine provides inhygienic reaction products with water (such as bad odors, urine stone), such that a water trap must always be flushed with water. The water trap consumes additional space and it does not look attractive.

Recently, one has tried to avoid a number of disadvantages of the bend filled with water by removing the water flushing and filling the bend with parrafin. In this way the unrine no longer forms disadvantagous rection products and can flow into the sewer through the paraffin. This solution has however shortcomings, i.a. because parrafin is expensive and can easily disappear from the bend, such as by unskilled actions (e.g. emptying a bucket soap in the urinal) or by sucking empty because of an under pressure developing in the sewer. Besides, paraffin is not completely free from danger of fire or explosion.

Besides, alternatives to the water trap bend are known, e.g. in ships or airplanes, wherein use is made of a pivoting, rigid valve which is kept closed by spring pressure and opens when an under pressure develops. Such a known system is, a.o. due to its complexity, not designed for sanitary systems connected to the public sewer. This system can also not prevent that gasses from the sewer pass the seal when the valve is pivoted open.

GB-A-2296309 discloses a non-return device comprising a straight, over its complete length lie-flat tube of silicon rubber. This is mounted in a sanitary discharge tube by stretching the edge of one longitudinal end into a circular ring and fixedly clamping it in this position in a circular clamping seat. At an axial distance to said clamping seat, the tube keeps its stress-free lie-flat shape, such that the tube walls are sealingly bearing. The stretching makes assembly difficult and increases the risk for getting loose or rupture.

Accordingly, there remains a desire for a reliable and preferably cost effective alternative to the water filled bend. This is where the invention comes in.

The invention proposes to replace the water trap by a seal with a passageway with a passage, of which at least one of the boundaries is easily deformable such that said passageway has a first position wherein the passage is at least substantially fluid, particularly gas tight, and a second position wherein the passage allows passage of fluid, particularly liquid and wherein by spring action said passage boundary tries to keep said passage in said first position or bring it from said second in said first position.

The passage boundary is preferably deformed, particularly flexed, by pressure from the liquid which tries to pass said seal. In particular said pressure is generated by gravity acting on said liquid. The passage boundary is preferably of easily elastic deformable material, such as a natural or synthetic elastomere, e.g. a rubber, such as neopreen, latex or silicons. The passage boundary preferably generates the required spring action by the own elasticity of the material of which it is made.

According to the invention no liquid is required to provide and maintain the desired one way closure. As soon as a liquid, such as urine, contacts the seal, its passage opens automatically and passes the liquid and thereafter immediateley closes again. If a small amount of liquid is offered, the passage only opens locally, such that even then it is ensured that the passage is at least substantially completely filled with liquid, such that no gas can pass the seal in the other direction.

According to a prefered embodiment, the passage is at least substantially slit like in the first (closed) position. By this, there is only minimum effort required to open and close the passage.

Particularly with a slit shaped passage an embodiment is prefered for the self closing character wherein the passage boundary is elastically deformed by flexure when opening the passage, preferably such that by flexing the passage boundary gets a convex/concave shape, i.e. viewed in bending direction follows a convex and subsequently concave shape, or vice versa. If the passage is provided by a sheet like material this can e.g. be provided by making a curve or buckle with a radius of curvature of not more than ten times, preferably at least substantially the thickness of the material.

According to another prefered embodiment, the passageway extends over a predetermined length, as viewed in the direction of flow of the liquid through the seal. Accordingly, the sealing capacity is improved. According to a cost effective embodiment this is provided if the passage comprises two lengthwise extending, opposite, flexible, preferably at least substantially flat material strips providing the passage between them. The sealing capacity is further improved if the passage extends over a predetermined length, which can be provided in a cost effective alternative by making the material strips extending at least substantially parallel. The passageway and/or passage preferably extend over a length that is at least one, preferably at least one and a half, more preferably at least one three quarter, most preferably at least two times the relevant width.

According to yet a further embodiment the seal comprises means to improve the shape stability of the passageway, to therewith better prevent that the seal malfunctions, e.g. due to a counter flowing liquid though the seal. With such means the 'sealing capacity can also be further improved. These means are e.g. arresting means or stiffening means or a sufficient length of the passageway or passage. According to a development of the means, the passage has a non-flat shape. E.g. the passage has a curved, angled, harmonica of serpentine shape. This non-flat shape is preferably relative to the lengthwise direction or the direction parallel to the direction of flow through the seal, but can in an alternative be normal to said length or flow direction. The passage can have a corresponding shape. In a further development the passage comprises two parts mutually making an angle smaller than 180°, preferably less than 175°, such as between 160° and 120, more preferably at least substantially 135°, with which the sealing capacity is further improved and also more reliably prevented that the seal malfunctions. To improve these functions, a further part connects to one or both of those parts, making an angle therewith smaller than 180°, preferably less than 175°, such as between 130° and 60°, more preferably at least substantially 90°, or at least substantially equal to the angle between said parts. Said two parts and said further parts are preferably at least substantially straight in lenghtwise or flow direction. Said parts preferably connect at least substantially immediately to each other and the other parts, preferably through a radius of curvature of not more than ten, preferably not more than three times the local material thickness and preferably at least substantially two times the local material thickness or at least equal thereto. The passage can have a corresponding shape. With this shape also a relatively long flow path through the seal is ensured by a shorter length, such that it takes sufficient little space in longitudinal direction while a sufficient endurance is ensured.

It is recognised that a change of wall thickness in longitudinal direction (i.e. flushing direction) of the seal of particularly the passageway is advantageous for the reliable function of the seal with both large and small liquid volume flows to be processed. Therefor preferably a part has a wall thickness which is preferably at least substantially 25%, more preferably at least substantially 50%, most preferably at least substantially 100%, such as at least 200%, larger than the wall thickness of a part present at the downstream side thereof. Preferably the wall thickness variation extends over at least 10% of the length of the passageway. Preferably the part of the passageway where the wall parts are mutually bearing has a wall thickness at least 25% smaller than a part at the upstream side thereof. According to a prefered embodiment the wall thickness of preferably at least 50% of the length of the passageway where the wall parts are mutually bearing is substantially constant along the length of the passageway. According to a further development the wall thickness changes with more than about 30%, more preferably more than about 50% in the part of the passageway where wall parts extend towards each other until preferably completely or almost completely mutually bearing and/or in the part connecting to the first mentioned part where the wall parts mutually bear.

The assymmetric e.g. curved, angled, hormonica or serpentine shape of the part of the passageway where wall parts mutually bear is advantageous for several reasons, among which increasing the reliability of the sealing action. For corresponding reasons it is advantageous if the length of at least one of the parts making an angle measures at least 3 mm, more preferably at least about 5 mm, such as 7 mm.

Practise has shown that at the location of a buckle the angle between two connecting parts is preferably not smaller than 90°, more preferably not smaller than 110° for reliable sealing.

The invention, further objects and corresponding advantages, are illustrated in the following with the aid of a presently prefered embodiment shown in the drawings, which is not meant to limit the exclusive rights.
Fig. 1 shows in perspective view a seal embodying the invention;
Fig. 2 shows a sectional side view of this seal;
Fig. 3 shows.a top view of this seal;
Fig. 4 shows a sectional view along the line IV-IV in fig. 2;
Fig. 5 shows the view of fig. 4, while little liquid flows through the seal;
Fig. 6 shows the view of fig. 4, while much liquid flows through the seal;
Fig. 7 shows a sectional view along the line VII-VII in fig. 2; and
Fig. 8 and 9 show a view according fig. 2 of a variant.

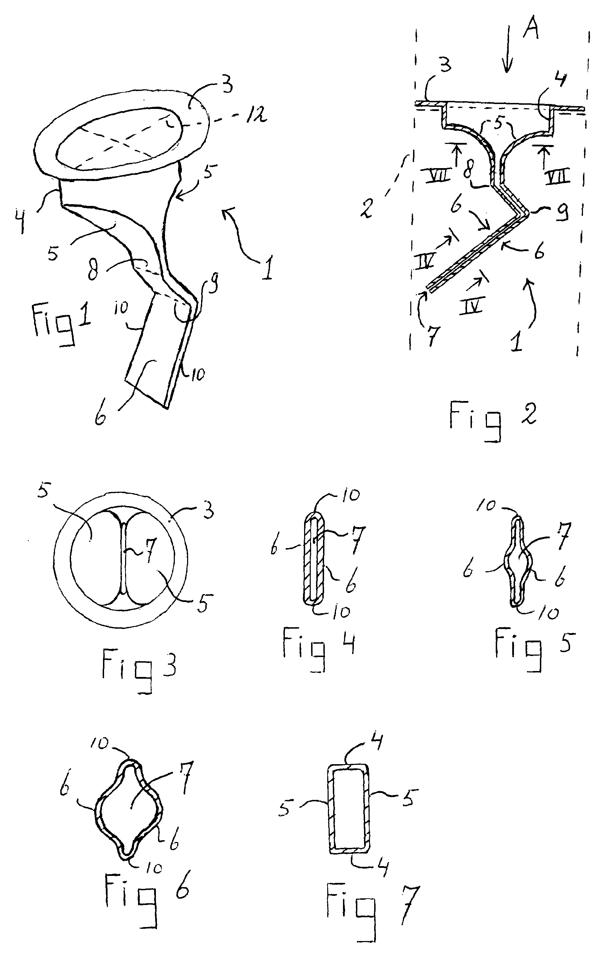

The seal 1 is mounted in a substantially vertical plastic or metal drain pipe 2 (shown in phantom in fig. 2), the top end of which is connected to a urinal (not shown) of stainless steel of ceramic or other convenient material, while the bottom end is connected to the public sewer (not shown). The drain pipe 2 is connected to only a single urinal, such that only urine and other liquids from said urinal flow through the seal 1. Urine or else from the urinal flows by gravity in the direction of the arrow A (fig. 2) through the seal 1. The seal 1 prevents that in the direction opposite to the arrow A at least gasses, and preferably also liquids, pass and thus enter the room through the dwelling. For a proper functioning and accessibility for e.g. replacement, the seal 1 is as near as possible to the urinal. Thus the seal 1 can be pulled out of the pipe 2 through the urine drain opening in the bottom of the urinal in the direction opposite to arrow A, whereafter a new seal 1 can be mounted by carrying out the procedure in the opposite order.

At its top, the seal 1 has een surrounding ring flange 3 as a mounting means to mount to the pipe 2 or the urinal or else in a fixed location. Extending from the inner edge thereof is a thin walled cylindrical part 4, merging into two radially opposite first, curved, sheet like flattened parts 5, smoothly and constantly extending towards each other to merge into flat, sheet like strips 6, mutually bearing over substantially their complete length and width and providing between them an gap 7 closed over at least substantially its complete length. These strips 6 have a first buckle at 8 and a second buckle at 9, such that the gap 7 between the strips 6 follows a zig-zag or serpentine path in lengthwise direction of the strips 6. These strips 6 each determine a passage boundary and together a passage, the width of which in rest is at least substantially equal to the outer diameter of the cylindrical part 4. It will be appreciated that because of this the external circumferential distance along the profile of these strips 6 (fig. 4) is smaller than that of the cylindrical part 4. These strips 6 are mutually connected along their longitudinal edges 10, such that they determine a positively flattened tube shape, delimiting a slit like passage 7 the length of which in rest is at least equal to the inner diameter of the cylindrical part 4.

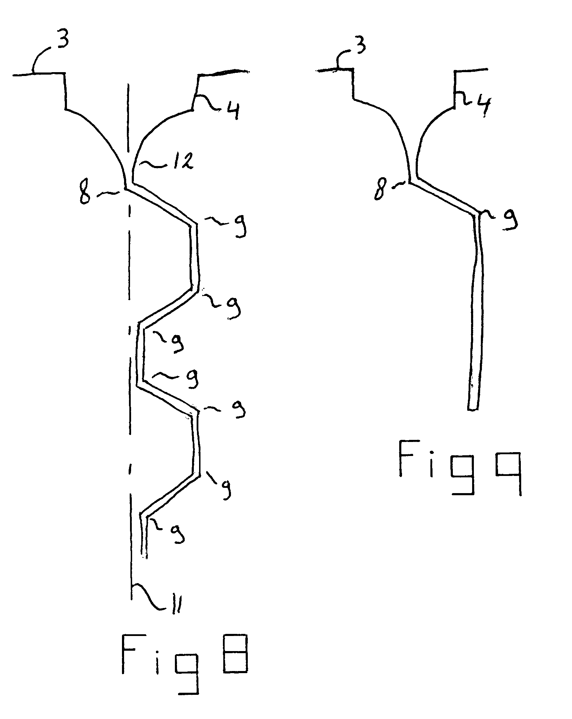

By applying pressure on the strips 6, the gap 7 can be opened (fig. 5, 6). In connection therewith, the strips 6 are designed such that if the gap 7 opens, the strips 6 are elastically flexed. This generates spring action, such that when the pressure ceizes, the strips 6 will automatically return to the original position and the gap 7 closes again. If a small quantity of liquid passes (fig. 5), the strips 6 only locally move apart. This is provided in that the longitudinal edges 10 merge via a radius of curvature equal to the tickness of the strips 6. By this, at their longitudinal edges the strips 6 behave more rigid when flexing compared to their centre. Besides, it has come out that an almost equally well result can be obtained if the longitudinal edges 10 merge via a radius of curvature equal to a value between three times and one half times the thickness of the strips 6.

The more liquid passes at the same time, the more gap 7 opens, until the maximum is obtained (fig. 6). As viewed from the outside, the seal 1 shows near the longitudinal edges 10 a concave (hollow) shape, changing into a convex (bulging) shape when going to the centre of the strips 6 (viz. fig. 5, 6).

The wall thickness of the seal 1 is 0.5 mm for the strips 6 and can vary between 0.5 and 2 mm. The part of the seal above the strips 6 preferably has a larger wall thickness, e.g. smoothly increasing from 0.5 mm to 0.8 mm. By this the seal offers more resistance against sudden supply of a large quantity of liquid, e.g. when a bucket water is poured into the urinal. The wall thickness and the Young's modulus of the material are selected such that the seal 1 has such an elasticity that under typical application circumstances the material has at least in radial circumferential direction a small elastic yield of at least about 10%, such that the largest deformation of the passage determined by the strips 6 is provided by wall flexure. While the gap 7 opens, the longitudinal edges 10 consequently move towards each other (viz. arrows B in fig. 6). Thus, also with completely opened gap 7 the external circumferential distance along the profile of these strips 6 (fig. 6) is smaller than that of the cylindrical part 4, such that the passage provides a passage narrowing compared to the cylindrical part 4. With completely opened gap its diameter is at least half that of the pipe 2 containing the seal.

Preferably, the strips 6 have a length between 100 mm and 40 mm, preferably between 85 mm and 50 mm, more preferably at least about 65 mm. The buckles 8 and 9 have an equal angle of 145° with a bending curvature of twice the local material thickness. The mutual distance between the buckles 8 and 9, measured along the strips 6, measures 25% to the most of the length of the strips 6. The buckle 8 is provided at not more than 20% of the length of the strips 6 below the change between the flat parts 5 and the strips 6. With these buckles 8, 9 a.o. resistance is offered against pushing the passage provided by the strips 6 in counter flow direction towards the opposite side of the flange (e.g. by water coming up within the pipe 2 when e.g. the sewer is plugged), whereby the seal 1 is at least partly turned inside out and can no longer function. With these buckles the strips 6 are locally more rigid and therewith offer more resistance against turning inside out. The more buckles, the better the resistance against turning inside out. Alternatively or in addition to the above one can provide an arresting element above the strips 6, e.g. in the cylindrical part 4 or above it. Generally, this arresting element will be provided in the fluid stream, e.g. having the shape of a grid of one or more (such as two) crossing rods 12, such as shown in phantom in fig. 1. Thus the seal can indeed slightly turn inside out, however after removal of the counter pressure can spring back on its own towards the usual shape and thus reliably keep functioning.

The seal 1 is an integral injection moulding part. The injection mould contains a mandrel wherearound at least the strips 6 are integrally moulded. This mandrel has in side view a zig-zag shape corresponding to fig. 2 with angles and radius of curvature as above for the buckles 8 and 9. This mandrel has a thickness between 0.6 mm and 0.1 mm, preferably between 0.4 mm and 0.2 mm, most preferably between 0.35 mm and 0.25 mm.

The above specified materials have a Young's modulus sufficient to offer the required pulling resistance at the indicated wall thickness.

Obviously alternatives are possible for the embodiments described above and shown in the drawings, without leaving the spirit and scope of the invention. E.g. the seal can be made of NPDM or pre-vulcanised natural latex, preferably with a low ammonium content of not more than 20%, such as at least substantially 15%. An example of the latter can be obtained under the trade naam VULJEX LA-5.

Fig. 8 shows a further variant in a view corresponding to fig. 2. The strips 6 are buckled over at least substantially the same angle (in this example 135°), at a plurality of locations 9, such that the seal 1 has an assymmetric shape compared to its central longitudinal axis 11, and the parts 6 mutually bear over a large length with relatively small mounting length of the seal 1. The length of the strips 6 between two succeeding buckles 9, and between buckle 8 and the first succeeding buckles 9 is at least substantially equal each time and measures in this embodiment about 7 mm. The wall thickness of the flange 3 and the part 4 measure 2.5 mm. The wall thickness of part 5 changes smoothly from 2.5 mm near part 4 until 1.5 mm at location 12 where the strips 6 start contacting each other. From that location the wall thickness subsequently decreases smootly until 0.6 mm near the buckle 8, and from there remains constant until the last buckle 9, to finally smoothly decrease until 0.4 mm at the free longitudinal end of the strips 6.

As with the embodiment of fig. 2, this embodiment of the seal is shown in its relaxed condition. Thus it will be appreciated that the part of the seal 1 upstream from the strips 6 is stably shaped such that without influence of external force the illustrated shape can be taken. Thus a simple and reliable mounting is ensured. Since large mounting forces lack, the risk of rupture can be avoided.

Fig. 9 shows another variant in the view corresponding to fig. 2, wherein the strips 6 extend over a relatively large length beyond ther single buckle 9. At locations 8 and 9 the strips 6 are buckled over approximately 135°.

The other details of the embodiment according to fig. 8 and 9 are equal to those of fig. 2. The invention also covers alternatives which are obtained by combining one or more individual features of the one embodiment disclosed in here with one or more individual features of one or more other embodiments disclosed in here. E.g. the wall thickness variation of the embodiment of fig. 8 is completely or partly applicable to other embodiments.

## Claims

1. Seal, particularly in a line which is connected to a urinal on the one hand and to the sewer system on the other hand, with a passageway (1) with a passage of which at least one of the preferably sheet like boundaries is easily deformable such that said passageway has a first position wherein the passage is at least substantially fluid, particularly gas tight,and a second position wherein the passage allows passage of fluid, particularly liquid and wherein preferably said passage boundary tries to keep said passage in the first position or brings it from the second in the first position by a force, such as by resilience.

2. Seal according to claim 1, with an elongated, preferably assymmetric, passageway (1) of thin walled, preferably elastomere material with a slit shaped passage (7) extending over some length of preferably between 100 mm and 40 mm, more preferably between 85 mm and 50 mm, such as at least substantially 65 mm, through the passageway, the wall (6) of which can easily be elastically deformed, particularly flexed, and preferably has a curverd part (10) for radial extension of the passageway by which said wall can obtain a convex/concave shape, such that the passageway has a first position (viz. fig. 4) wherein the passage is at least substantially fluid tight by mutually bearing of wall parts thereof, and a second position (viz. fig. 6) wherein the passage allows passage of fluid since wall parts thereof are radially moved away from each other, to provide fluid connection between urinal and sewer through the seal, and wherein preferably integral spring action of the wall tries to keep said passage in the first position or brings it from the second in the first position.

3. Seal according to claim 1 or 2, wherein the passageway (1) has at least two, preferably at least three parts (8, 9) mutually making an angle, preferably smaller than 180°, more preferably smaller than 175°, such as between 160° and 120° or between 130° and 60°, more preferably not smaller than 90°, most preferably not smaller than 110° such as at least about 145°, 135° or 90°, wherein such a part (8, 9) preferably has a length of not more than 25%, more preferably not more than 20% and/or at least 5%, more preferably at least 8%, such as at least 10% of the length of the passage (7), such as at least 3 mm, more preferably at least 5 mm, such as about 7 mm and/or the length of the one part is larger, preferably at least two times larger than the other part.

4. Seal according to claim 1, 2 or 3, with a radius of curvature of not more than 10 times, preferably not more than three times, more preferably between three times and one half times, such as at least about two times the local material thickness or at least about equal thereto.

5. Seal according to any of the preceeding claims, with a wall thickness between 0.5 and 2 mm, such as smoothly increasing from 0.5 mm to 0.8 mm and/or with a part whereof the wall thickness is larger, preferably at least about 25%, more preferably at least about 50%, most preferably at least about 100%, such as at least 200%, than the wall thickness of another part, preferably at the downstream side thereof, wherein the changing wall thickness can cover at least 10% of the length of the passageway (1), such that in a part wherein wall parts mutually bear the wall thickness can be at least 25% smaller than in a part at the upstream side thereof, wherein the wall thickness of preferably at least 50% of the length of a part wherein wall parts mutually bear can be substantially constant along the length, while the wall thickness can change with more than at least about 30%, more preferably at least about 50% in the part of the passageway (1) where the wall parts extend toward each other and/or mutually bear.

6. Seal according to any of the preceeding claims, comprising a natural or synthetic elastomere, e.g. a rubber, such as neoprene, latex or silicons, such as NPDM or pre-vulcanised natural latex, preferably with a low ammonium content of not more than 20%, such as at least substantially 15%, with preferably an elasticity such that at typical application conditions the material has at least in radial circumferential direction a small elastic yield of not mare than at least substantially 10%, such that preferably the largest deformation is provided by wall flexure such that if the seal opens, edges (10) thereof move towards each other.

7. Seal according to any of the preceeding claims, which in completely opened position has a flushing narrowing of which the diameter preferably measures at least substantially half that of the line (2) in which the seal is provided.

8. Seal according to any of the preceeding claims, wherein it has a longitudinal end with possibly a mounting flange (3), naturally determining an opened, preferably at least substantially circular flushing opening, to which preferably a tapering part (5) connects, possibly with interposition of an at least substantially straight part (4).

9. Seal according to any of the preceeding claims, wherein it is an injection moulding part, preferably fabricated with the aid of a mandrel with preferably a thickness between 0.6 mm and 0.1 mm, more preferably between 0.4 mm and 0.2 mm, most preferably between 0.35 mm and 0.25 mm.

10. Seal according to any of the preceeding claims, wherein the passage (7) is at least substantially straight and possibly there is an at least substantially right angled cross section (viz. fig. 7) and/or the passageway (1) is as illustrated in the enclosed drawing.
